# DEMANDE DE BREVET EUROPEEN

(11) **EP 4 458 121 A1**
(43) Date de publication de la demande: **06.11.2024**
(21) Numéro de dépôt: 24174262.6
(22) Date de dépôt: 06.05.2024
(51) Int. Cl.: A01B 39/26, A01D 34/86, A01D 75/18, A01B 63/00, A01B 63/111

(54) **DISPOSITIF, KIT ET PROCÉDÉ DE DÉTECTION DE DÉNIVELÉS ET/OU D`OBSTACLES DANS UN CHAMP**

(30) Priorité: 05.05.2023 FR 2304527
(71) Demandeur: Jean Michel Egretier S.a.r.l., 11100 Narbonne (FR)
(72) Inventeur: Egretier, Jean-Michel, 11110 Coursan (FR)
(74) Mandataire: Cornuejols, Marine Sophie

(57) **Abrégé**

Un dispositif (100) de détection de dénivelés et/ou d'obstacles dans un champ, qui comporte :
- un châssis comportant :
- au moins un outil (116, 136),
- au moins un moyen de détection d'un obstacle (115, 135),
- au moins un moyen de détection d'un dénivelé comportant une roue (119) en appui sur le sol et un capteur de contact (120) de la roue sur le sol,
- un moyen de modification (114, 134, 113, 133, 123, 143) de la position relative de la roue et/ou de l'au moins un outil par rapport au châssis,
- un moyen de commande (150) configuré pour commander la modification de la position de la roue et/ou de l'au moins un outil :
- lorsqu'un obstacle est détecté et/ou
- lorsqu'une absence de contact de la roue sur le sol est détectée.

## Description

### Domaine technique de l'invention

La présente invention vise un dispositif, un kit et un procédé de détection de dénivelés et/ou d'obstacles dans un champ. Elle s'applique, notamment, au domaine de l'agriculture et de la viticulture.

### État de la technique

Les champs, d'arbres fruitiers ou de vignes par exemple, sont organisés en rangées. Afin d'entretenir le champ, il est nécessaire de travailler le sol proche des plantations sans les endommager. Si le tracteur tirant l'outil de travail du champ se déporte, si la largeur ou le devers de plantation vient à changer, le réglage de la largeur ou de la profondeur de l'outil travail peut avoir de graves conséquences sur les cultures, d'autant plus si les réglages sont fixes.

Il n'existe actuellement pas de solution pour détecter efficacement des irrégularités dans un champ.

On connait : la demande de brevet européen EP 4 133 920 A2, la demande de brevet italien IT VR20 120 100 A1, la demande de brevet chinois CN 111 771 513 A et la demande de brevet américain US 2002/100266 A1. Ces documents divulguent différentes machines ou outils pour machines agricoles, toutefois, aucun de ces documents ne permet de détecter les irrégularités d'un champ et d'y réagir.

### Résumé de l'invention

La présente invention vise à remédier à tout ou partie de ces inconvénients.

La présente invention a pour but d'avoir un réglage et le contrôle de la largeur ou de la profondeur automatique pour que l'outil conserve toujours la même largeur ou profondeur de travail. La présente invention est un système de réglage de largeur, de recentrage et de contrôle de profondeur automatique qui s'adapte sur tout porte-outil et qui permet à l'utilisateur de contrôler la largeur ainsi que la profondeur de travail.

La présente invention protège les plantations, et en même temps, l'utilisateur, car celui-ci étant sûr de travailler dans de bonnes conditions n'aura pas à se retourner sans cesse et pourra adopter une meilleure position de conduite et ainsi éviter des troubles musculosquelettiques.

### Présentation de l'invention

Selon un premier aspect, la présente invention vise un dispositif de détection de dénivelés et/ou d'obstacles dans un champ, qui comporte :
- un châssis comportant :
   - deux roues,
   - au moins un outil,
   - au moins un moyen de détection d'un obstacle,
   - au moins un moyen de détection d'un dénivelé comportant une autre roue en appui sur le sol et un capteur de contact de cette autre roue sur le sol,
   - un moyen de modification de la position relative desdites deux roues et/ou de l'au moins un outil par rapport au châssis,
   - un moyen de commande configuré pour commander la modification de la position de la roue et/ou de l'au moins un outil :
      - commander la modification de la position de l'au moins un outil lorsqu'un obstacle est détecté, et
      - commander la modification de la position desdites deux roues par rapport au châssis lorsqu'une absence de contact de ladite autre roue sur le sol est détectée.

Grâce à ces dispositions, il est possible de détecter des plantations et de rétracter un outil de travail du sol. Les plantations, par exemple des arbres et/ou des pieds de vigne, ne sont donc pas endommagées. De plus, afin d'avoir un outil plus efficace de travail du sol, les dénivelés locaux sont détectés et l'outil peut donc être remis en position pour toujours pénétrer le sol suffisamment.

Dans des modes de réalisation, le moyen de commande comporte un moyen de réglage d'une position latérale de chaque moyen de détection d'obstacle par rapport au châssis.

Grâce à ces dispositions, le dispositif est adaptable à des champs dans lesquels les plantations sont en rangées, quelle que soit la dimension entre deux rangées.

Dans des modes de réalisation, le moyen de commande comporte un moyen de mémorisation d'une position latérale avant la détection d'un obstacle, le moyen de commande étant configuré pour :
- rétracter l'au moins un outil lorsqu'un obstacle est détecté et
- en absence d'obstacle, repositionner l'au moins un outil à la position latérale mémorisée avant la détection d'un obstacle.

Grâce à ces dispositions, lorsqu'une plantation est détectée, l'outil est retracé pour protéger la plantation puis repositionné pour travailler entre les plantations.

Dans des modes de réalisation, le dispositif objet de la présente invention comporte, de plus, un moyen de mesure d'une dimension latérale de l'au moins un outil, et dans lequel la position latérale de chaque moyen de détection d'obstacle par rapport au châssis est réglée en fonction de la dimension latérale mesurée.

Grâce à ces dispositions, le dispositif est adapté aux dimensions de l'outil de travail du sol qui peut différer d'un fabricant à l'autre.

Dans des modes de réalisation, le dispositif objet de la présente invention comporte, de plus, un moyen d'enregistrement de la position de l'au moins un outil par rapport au châssis.

Grâce à ces dispositions, lorsque l'utilisateur s'arrête pour la journée ou pour une pause, la position de l'outil est mémorisée.

Dans des modes de réalisation, le moyen de commande est configuré pour positionner l'au moins un outil dans la dernière position enregistrée.

Grâce à ces dispositions, lorsque l'utilisateur s'arrête pour la journée ou pour une pause, la position de l'outil mémorisée permet de reconfigurer la position de l'outil pour redémarrer le traitement du sol plus rapidement.

Dans des modes de réalisation, le moyen de modification de la position relative desdites deux roues et de l'au moins un outil par rapport aux châssis comporte au moins un vérin hydraulique.

Grâce à dispositions, le dispositif est réactif et peut donc rattraper le dénivelé détecté rapidement ou rétracter le moyen de détection d'un obstacle et/ou l'outil rapidement.

Dans des modes de réalisation, le moyen de détection d'un obstacle comporte une partie flexible se déformant au contact d'un obstacle et un capteur de déformation de la partie flexible.

Grâce à ces dispositions, le dispositif est robuste et résiste à un éventuel encrassement lors du travail du sol.

Dans des modes de réalisation, le moyen de détection d'obstacle est un capteur de proximité.

Grâce à ces dispositions, tout contact avec les plantations est évité, elles sont ainsi préservées.

Selon un deuxième aspect, la présente invention vise un procédé de détection de dénivelés et/ou d'obstacles dans un champ, qui comporte :
- une étape de détection d'un obstacle,
- une étape de détection d'un dénivelé au moyen d'un moyen de détection d'un dénivelé,
- une étape de commande d'une modification de la position de deux roues et/ou d'au moins un outil :
   - lorsqu'un obstacle est détecté et/ou
   - lorsqu'une absence de contact d'une autre roue sur le sol est détectée, le moyen de détection d'un dénivelé comportant cette autre roue en appui sur le sol et un capteur de contact de ladite autre roue sur le sol,
   - une étape de modification (46) de la position relative desdites deux roues (123, 143) et/ou de l'au moins un outil par rapport au châssis.

Les buts, avantages et caractéristiques particulières du procédé objet de la présente invention étant similaires à ceux du dispositif objet de la présente invention, ils ne sont pas rappelés ici.

Selon un troisième aspect, la présente invention vise un kit pour former un dispositif de détection de dénivelés et/ou d'obstacles dans un champ, qui comporte :
- au moins un moyen de fixation à un châssis,
- deux roues,
- au moins un outil,
- au moins un moyen de détection d'un obstacle,
- au moins un moyen de détection d'un dénivelé comportant une autre roue en appui sur le sol et un capteur de contact de cette autre roue sur le sol,
- un moyen de modification de la position relative desdites deux roues et/ou de l'au moins un outil par rapport au châssis,
- un moyen de commande configuré pour commander la modification de la position de la roue et/ou de l'au moins un outil :
   - commander la modification de la position de l'au moins un outil lorsqu'un obstacle est détecté, et
   - commander la modification de la position desdites deux roues par rapport au châssis lorsqu'une absence de contact de ladite autre roue sur le sol est détectée.

Les buts, avantages et caractéristiques particulières du kit objet de la présente invention étant similaires à ceux du dispositif objet de la présente invention, ils ne sont pas rappelés ici.

### Brève description des figures

D'autres avantages, buts et caractéristiques particulières de l'invention ressortiront de la description non limitative qui suit d'au moins un mode de réalisation particulier du dispositif, du kit et du procédé objets de la présente invention, en regard des dessins annexés, dans lesquels :
- La figure 1 représente, schématiquement et en perspective, un premier mode de réalisation particulier du dispositif objet de la présente invention,
- La figure 2 représente, schématiquement et en vue de dessus, le premier mode de réalisation particulier du dispositif objet de la présente invention,
- La figure 3 représente, schématiquement et en vue de côté, le premier mode de réalisation particulier du dispositif objet de la présente invention et
- La figure 4 représente, schématiquement et sous forme de logigramme, un premier mode de réalisation d'un procédé objet de la présente invention.

### Description des modes de réalisation

La présente description est donnée à titre non limitatif, chaque caractéristique d'un mode de réalisation pouvant être combinée à toute autre caractéristique de tout autre mode de réalisation de manière avantageuse.

L'expression "et/ou", telle qu'elle est utilisée dans le présent document et dans les revendications, doit être comprise comme signifiant "l'un ou l'autre ou les deux" des éléments ainsi conjoints, c'est-à-dire des éléments qui sont présents de manière conjonctive dans certains cas et de manière disjonctive dans d'autres cas. Les éléments multiples énumérés avec "et/ou" doivent être interprétés de la même manière, c'est-à-dire "un ou plusieurs" des éléments ainsi conjoints. D'autres éléments peuvent éventuellement être présents, autres que les éléments spécifiquement identifiés par la clause "et/ou", qu'ils soient liés ou non à ces éléments spécifiquement identifiés. Ainsi, à titre d'exemple non limitatif, une référence à "A et/ou B", lorsqu'elle est utilisée conjointement avec un langage ouvert tel que "comprenant" peut se référer, dans un mode de réalisation, à A seulement (incluant éventuellement des éléments autres que B) ; dans un autre mode de réalisation, à B seulement (incluant éventuellement des éléments autres que A) ; dans un autre mode de réalisation encore, à A et B (incluant éventuellement d'autres éléments) ; etc.

Tel qu'utilisé ici dans la description et dans les revendications, "ou" doit être compris comme ayant la même signification que "et/ou" tel que défini ci-dessus. Par exemple, lorsqu'on sépare des éléments dans une liste, "ou" ou "et/ou" doit être interprété comme étant inclusif, c'est-à-dire l'inclusion d'au moins un, mais aussi de plus d'un, d'un nombre ou d'une liste d'éléments, et, facultativement, d'éléments supplémentaires non listés. Seuls les termes indiquant clairement le contraire, tels que "un seul des" ou "exactement un des", ou, lorsqu'ils sont utilisés dans les revendications, "consistant en", font référence à l'inclusion d'un seul élément d'un nombre ou d'une liste d'éléments.

Telle qu'elle est utilisée dans la présente description et dans les revendications, l'expression "au moins un", en référence à une liste d'un ou de plusieurs éléments, doit être comprise comme signifiant au moins un élément choisi parmi un ou plusieurs éléments de la liste d'éléments, mais n'incluant pas nécessairement au moins un de chaque élément spécifiquement énuméré dans la liste d'éléments et n'excluant pas toute combinaison d'éléments dans la liste d'éléments. Cette définition permet également la présence facultative d'éléments autres que les éléments spécifiquement identifiés dans la liste des éléments auxquels l'expression "au moins un" fait référence, qu'ils soient liés ou non à ces éléments spécifiquement identifiés. Ainsi, à titre d'exemple non limitatif, "au moins l'un de A et B" (ou, de manière équivalente, "au moins l'un de A ou B", ou, de manière équivalente, "au moins l'un de A et/ou B") peut se référer, dans un mode de réalisation, à au moins un, incluant éventuellement plus d'un, A, sans B présent (et incluant éventuellement des éléments autres que B) ; dans un autre mode de réalisation, à au moins un, comprenant éventuellement plus d'un, B, sans A présent (et comprenant éventuellement des éléments autres que A) ; dans encore un autre mode de réalisation, à au moins un, comprenant éventuellement plus d'un, A, et au moins un, comprenant éventuellement plus d'un, B (et comprenant éventuellement d'autres éléments) ; etc.

Dans les revendications, ainsi que dans la description ci-dessous, toutes les expressions transitoires telles que "comprenant", "incluant", "portant", "ayant", "contenant", "impliquant", "tenant", "composé de", et autres, doivent être comprises comme étant ouvertes, c'est-à-dire comme signifiant incluant, mais non limité à. Seules les expressions transitoires "consistant en" et "consistant essentiellement en" doivent être comprises comme des expressions transitoires fermées ou semi-fermées, respectivement.

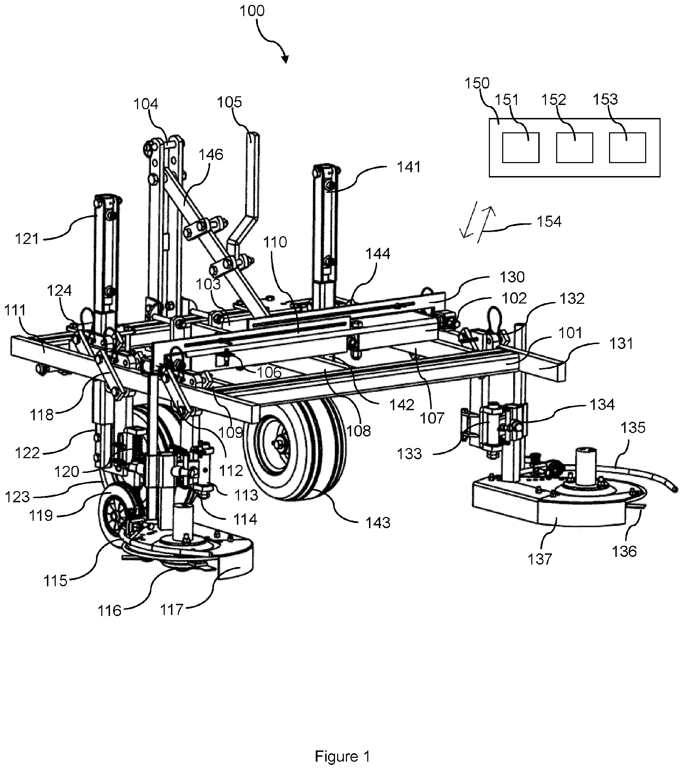

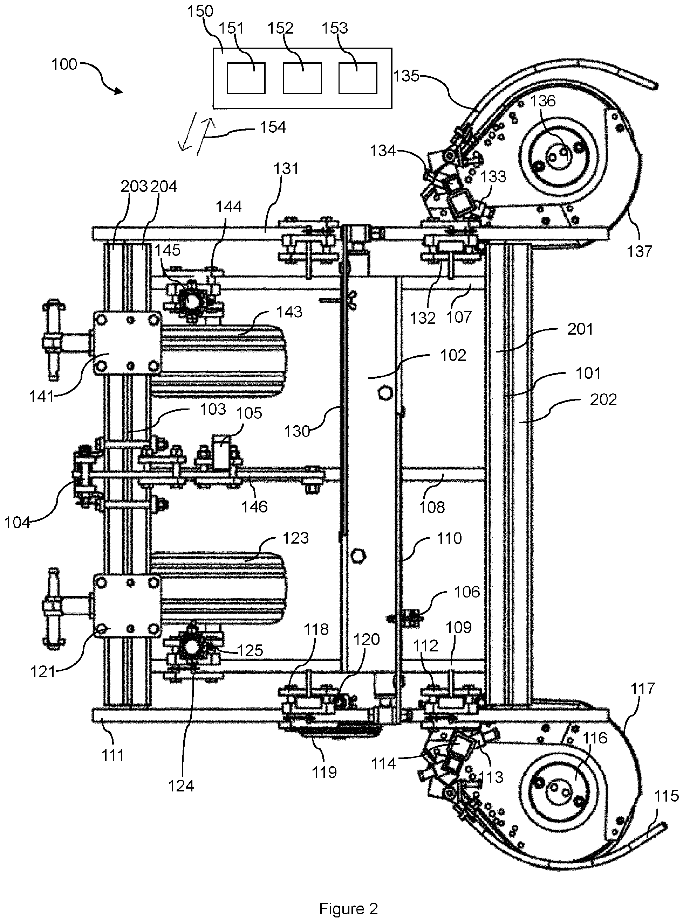

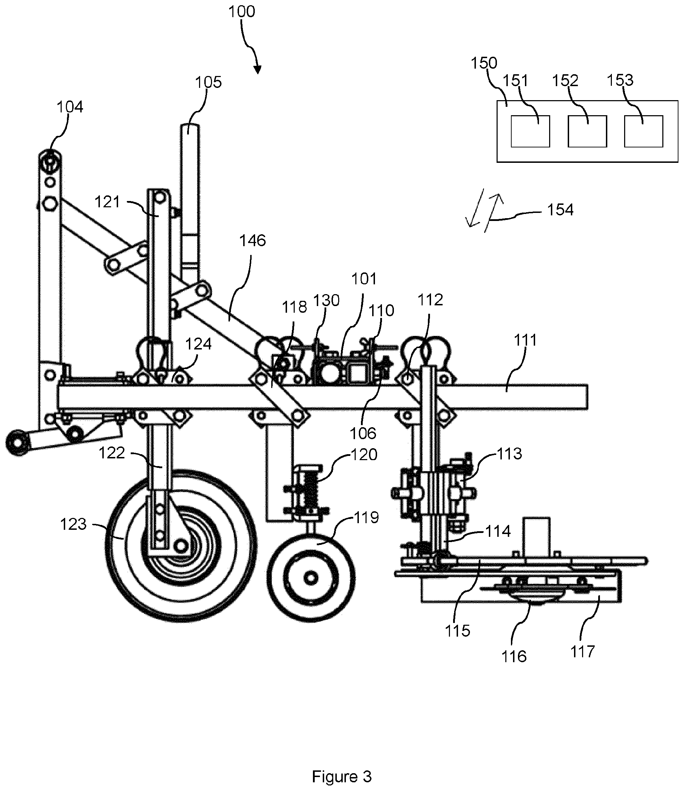

On note dès à présent que les figures 1 à 3 sont à l'échelle.

On observe, sur les figures 1, 2 et 3, qui sont à l'échelle, mais à des échelles différentes, une vue schématique d'un mode de réalisation du dispositif 100 objet de la présente invention.

Le dispositif 100 de détection de dénivelés et/ou d'obstacles dans un champ comporte un châssis. Le châssis comporte trois traverses, 107, 108 et 109, parallèles. Les traverses, 107, 108 et 109, sont préférentiellement en alliage métallique, par exemple en acier inoxydable ou en alliage d'aluminium. Les traverses, 107, 108 et 109, sont des profilés métalliques droits à section rectangulaire creuse agencés parallèlement. Les traverses, 107, 108 et 109, peuvent avoir toute autre section connue de l'homme du métier.

Les traverses, 107, 108 et 109 sont fixées à trois coulisseaux, 101, 102 et 103. Le coulisseau 101 est de profilé métallique droit de section rectangulaire creuse.

Les coulisseaux, 102 et 103, présentent une section en forme de deux U accolés. Une section en forme de U comporte deux bras parallèles et une jonction perpendiculaire aux deux bras joignant une extrémité de chaque bras de sorte à former une rigole. Les sections en forme de U des coulisseaux, 102 et 103, sont disposées de telle manière que les ouvertures entre les bras de chaque section sont du même côté. Dans des modes de réalisation, les sections en forme de U présentent un rabat à l'extrémité de chaque bras configuré pour maintenir une coulisse, 201, 202, 203 ou 204, dans la section en forme de U.

Les coulisseaux, 102 et 103, sont préférentiellement obtenus par accolage de deux profilés à section en forme de U, par soudage ou toute autre liaison mécanique connue de l'homme du métier.

Dans des modes de réalisation, les coulisseaux, 102 et 103, peuvent présenter toute autre forme compatible avec la réalisation d'une liaison glissière.

Les coulisseaux, 101, 102 et 103 sont agencés perpendiculairement aux traverses, 107, 108 et 109, et forment un plan configuré pour être sensiblement parallèle au sol lorsque le dispositif est en cours d'utilisation.

Le châssis comporte deux parties mobiles en translation par rapport aux coulisseaux, 101, 102 et 103, de part et d'autre des coulisseaux, 101, 102 et 103.

La première partie mobile en translation comporte une traverse 131 connectée à trois coulisses :
- une première coulisse 130 de forme correspondante au coulisseau 101 et formant une liaison glissière avec le coulisseau 101,
- une deuxième coulisse 201 de forme correspondante au coulisseau 102 et formant une liaison glissière avec le coulisseau 102,
- une deuxième coulisse 203 de forme correspondante au coulisseau 103 et formant une liaison glissière avec le coulisseau 103.

La traverse 131 se déplace donc parallèlement aux traverses, 107, 108 et 109 du châssis.

La deuxième partie mobile en translation comporte une traverse 111 connectée à trois coulisses :
- une première coulisse 110 de forme correspondante au coulisseau 101 et formant une liaison glissière avec le coulisseau 101,
- une deuxième coulisse 202 de forme correspondante au coulisseau 102 et formant une liaison glissière avec le coulisseau 102,
- une deuxième coulisse 204 de forme correspondante au coulisseau 103 et formant une liaison glissière avec le coulisseau 103,

La traverse 111 se déplace donc parallèlement aux traverses, 107, 108 et 109 du châssis.

Les coulisses, 110, 130, 201 à 204, sont préférentiellement en alliage métallique.

Préférentiellement, au moins une première coulisse, 110 et 130, comporte un moyen de réglage d'une position latérale. Par exemple, le moyen de réglage en position latérale peut être un vérin hydraulique ou pneumatique fixé d'une part à la coulisse, 110 ou 130, et d'autre part au coulisseau 102.

On appelle latérale, ce qui est dans une direction parallèle à l'axe du coulisseau 102.

Préférentiellement, chaque partie mobile comporte un outil, 116 ou 136. Le moyen de réglage de la position latérale décrit ci-dessus est alors un moyen de modification de la position relative l'au moins un outil, 116 ou 136, par rapport au châssis.

Préférentiellement, la position relative de l'outil, 116 ou 136, par rapport au châssis est mesurée par un moyen de mesure d'une position 106, tels une réglette ou un compteur configuré pour détecter une position en fonction d'un nombre de tours de moteurs pas-à-pas effectués.

L'outil 116 ou 136, est fixé à la traverse, 111 ou 131, de chaque partie mobile au moyen d'une liaison pivot, 114 ou 134, d'axe perpendiculaire aux traverses, 107, 108 et 109, et aux coulisseaux, 101, 102 et 103. Par exemple, chaque traverse, 111 ou 131, de chaque partie mobile peut comporter une tige de support de l'outil, fixé par un moyen de fixation amovible, 112 ou 132. La tige, d'axe parallèle à l'axe de la liaison pivot, peut être munie d'un moteur électrique, 113 ou 133. Le moteur, 113 ou 133, actionne en rotation l'outil, 116 ou 136, selon l'axe de la liaison pivot. Chaque moteur peut alors être un moyen de modification de la position relative de l'au moins un outil par rapport au châssis. Par ailleurs, chaque moteur comporte préférentiellement un moyen de mesure d'une position de l'outil, 116 ou 136, par rapport au châssis.

Dans le mode de réalisation représenté, l'outil, 116 ou 136, est une tondeuse équipée d'une protection latérale 117 pour éviter les projections dangereuses.

Préférentiellement, l'outil, 116 ou 136, comporte un moyen de détection d'un obstacle comportant une partie flexible se déformant au contact d'un obstacle et un capteur de déformation de la partie flexible. Par exemple, la partie flexible peut être un palpeur arrondi, 115 ou 135, circonscrivant au moins partiellement l'outil, 116 ou 136. Le palpeur, 115 ou 135, peut être fixé à un ressort. Lorsque le palpeur, 115 ou 135, entre en contact avec un obstacle, le palpeur, 115 ou 135, se déplace et déforme le ressort ce qui actionne un capteur de déformation de la partie flexible. Une fois l'obstacle passé, le palpeur est rappelé en position initiale par le ressort.

Le capteur de déformation de la partie flexible peut être un bouton-poussoir sur lequel le ressort et/ou le palpeur, 115 ou 135, actionne suite à une déformation.

Dans des modes de réalisation non représentés, le moyen de détection d'obstacle est un capteur de proximité, par exemple un capteur à infrarouges.

Le châssis comporte également deux roues, 123 et 143, fixées au coulisseau 103 par une liaison glissière, 121 et 141, d'axe perpendiculaire à l'axe de la liaison glissière, 121 et 141, formé par le coulisseau 103 et à l'axe de chaque traverse, 107, 108 et 109. La liaison glissière, 121 et 141, est munie d'un moyen positionnement de la roue, 123 ou 143, tel un vérin pneumatique ou hydraulique, par exemple. Le moyen de positionnement de la roue est configuré pour positionner la roue à une distance prédéterminée du sol. Un tel moyen de positionnement peut être un moyen de modification de la position relative de la roue et de l'au moins un outil par rapport au châssis.

Au moins une partie mobile comporte un moyen de détection d'un dénivelé comportant une roue 119 en appui sur le sol et un capteur de contact 120 de la roue sur le sol. Dans le mode de réalisation représenté en figures 1 à 3, le moyen de détection d'un dénivelé 120 est fixé à la traverse 111. Le moyen de détection d'un dénivelé peut être tout moyen de détection d'une translation selon une liaison glissière. Préférentiellement, le moyen de détection d'un dénivelé comporte un ressort configuré pour pousser la roue 119 vers le sol.
Le dispositif 100, objet de la présente invention comporte également, un moyen de commande 150 configuré pour :
- commander la modification de la position de l'au moins un outil lorsqu'un obstacle est détecté, et
- commander la modification de la position desdites deux roues, 123 et 143, par rapport au châssis lorsqu'une absence de contact de ladite autre roue 119 sur le sol est détectée.

Le moyen de commande peut recevoir au moins une information représentative d'une valeur parmi :
- une valeur représentative d'une mesure de position issue du moyen de mesure d'une position 106,
- une valeur représentative d'une mesure de position de l'outil, 116 ou 136, par rapport au châssis,
- une valeur représentative de la détection ou de l'absence d'un obstacle, issue du moyen de détection 115,
- une valeur représentative du positionnement des roues 123 et 143 et/ou,
- une valeur représentative d'une absence de contact de la roue 119 sur le sol, issu du capteur 120.

Le moyen de commande peut transmettre des commandes :
- de modification d'une position de chaque partie mobile par rapport au châssis, par exemple définie par l'utilisateur au moyen d'une interface homme-machine ou issue d'une mémoire informatique 151, la modification étant mise en oeuvre par le moyen de réglage de la position latérale,
- de modification de la position de l'outil, 116 ou 136, par rapport au châssis, lorsqu'un obstacle est détecté, la modification de la position étant effectuée par le moteur 114 et/ou 134,
- de modification du positionnement des roues lorsqu'un dénivelé est détecté, c'est-à-dire en cas d'absence de contact de la roue 119 sur le sol, la modification étant mise en oeuvre par les vérins des liaisons glissières, 121 et 141,
- de configuration du positionnement des roues, 123 et 143, par exemple définie par l'utilisateur au moyen d'une interface homme-machine ou issue d'une mémoire informatique 151, la configuration étant mise en oeuvre par les vérins des liaisons glissières, 121 et 141, et/ou
- de configuration de la position de l'outil, 116 ou 136, par rapport au châssis, par exemple définie par l'utilisateur au moyen d'une interface homme-machine ou issue d'une mémoire informatique 151, la configuration étant mise en oeuvre par au moins un moyen de modification de la position relative de l'au moins un outil par rapport au châssis.

Les commandes et valeurs peuvent être transmises de manière filaire ou non par un moyen de communication 154 du moyen de commande 150.

Préférentiellement, le moyen de commande comporte un moyen de réglage 152 d'une position latérale de chaque moyen de détection d'obstacle 115 et 135 par rapport au châssis. Le moyen de réglage 152 commande alors le moteur, 113 ou 133, en position, par exemple pour correspondre à la distance entre deux rangées d'un champ.

Dans des modes de réalisation, le moyen de commande comporte un moyen de mémorisation 151 d'une position latérale avant la détection d'un obstacle, le moyen de commande 150 étant configuré pour :
- rétracter au moins un outil, 116 ou 136, lorsqu'un obstacle est détecté et
- en absence d'obstacle, repositionner l'au moins un outil, 116 ou 136, à la position latérale mémorisée avant la détection d'un obstacle.

On appelle rétracter, la modification de la position de l'au moins un outil, 116 ou 136, pour augmenter la compacité du dispositif 100.

Lorsqu'un dénivelé est détecté, les vérins des liaisons glissières, 121 et 141, sont actionnés de sorte que la position de l'outil par rapport au sol reste sensiblement constante, quel que soit le dénivelé.

En d'autres termes, la position avant la détection d'un obstacle est mémorisée pour que l'outil puisse reprendre cette position une fois l'obstacle passé. Le moyen de mémorisation 151 est, par exemple, une mémoire informatique.

Dans des modes de réalisation, le dispositif 100 comporte, de plus, un moyen de mesure d'une dimension latérale de l'au moins un outil, 116 ou 136, et dans lequel la position latérale de chaque moyen de détection d'obstacle, 115 ou 135, par rapport au châssis est réglée en fonction de la dimension latérale mesurée. Par exemple, le moyen de mesure d'une dimension latérale peut être un détecteur de l'outil monté sur le châssis associant chaque outil à des dimensions dans une base de données.

Dans des modes de réalisation, le moyen de commande 150 comporte de plus, un moyen d'enregistrement 153 de la position de l'au moins un outil, 116 et 136, par rapport au châssis. Le moyen d'enregistrement 153 peut être une mémoire informatique. Préférentiellement, le moyen de commande est configuré pour positionner l'au moins un outil, 116 ou 136, dans la dernière position enregistrée.

Dans des modes de réalisation, le moyen d'enregistrement 153 peut associer à au moins un champ, au moins d'une valeur géolocalisée parmi :
- une valeur représentative d'une mesure de position issue du moyen de mesure d'une position 106,
- une valeur représentative d'une mesure de position de l'outil, 116 ou 136, par rapport au châssis,
- une valeur représentative de la détection ou de l'absence d'un obstacle,
- une valeur représentative du positionnement des roues 123 et 143 et/ou,
- une valeur représentative d'une absence de contact de la roue 119 sur le sol.

Un champ est, par exemple, représenté géométriquement en parcelle dans une mémoire informatique, par exemple le moyen de mémorisation 151.

Préférentiellement, le moyen de commande 150 communique avec un moyen de géolocalisation.

Dans des modes de réalisation, une interface homme-machine communiquant avec le moyen de commande 150 est configurée pour transmettre des commandes :
- de configuration du positionnement des roues, 123 et 143, par exemple définie par l'utilisateur au moyen d'une interface homme-machine ou issue d'une mémoire informatique 151, et/ou
- de configuration de la position de l'outil, 116 ou 136, par rapport au châssis, par exemple définie par l'utilisateur au moyen d'une interface homme-machine ou issue d'une mémoire informatique 151.

La configuration du positionnement des roues, 123 et 143, est préférentiellement mise en oeuvre par les vérins des liaisons glissières, 121 et 141. La configuration de la position de l'outil par rapport au châssis est mise en oeuvre par au moins un moyen de réglage de la position latérale et/ou un moyen de modification de la position relative de l'outil par rapport au châssis.

La présente invention peut être disposée sous forme de kit pour former un dispositif 100 de détection de dénivelés et/ou d'obstacles dans un champ, qui comporte :
- au moins un moyen de fixation à un châssis,
- deux roues, 123 et 143,
- au moins un moyen de détection d'un obstacle, 115 et 135,
- au moins un moyen de détection d'un dénivelé comportant une autre roue 119 en appui sur le sol et un capteur de contact 120 de cette autre roue 119 sur le sol,
- un moyen de modification, 121, 141, 114, 134, 113 et 133, de la position relative desdites deux roues, 123 et 143 et/ou de l'au moins un outil par rapport au châssis,
- un moyen de commande 150 configuré pour :
   - commander la modification de la position de l'au moins un outil lorsqu'un obstacle est détecté, et
   - commander la modification de la position desdites deux roues, 123 et 143 par rapport au châssis lorsqu'une absence de contact de ladite autre roue 119 sur le sol est détectée.

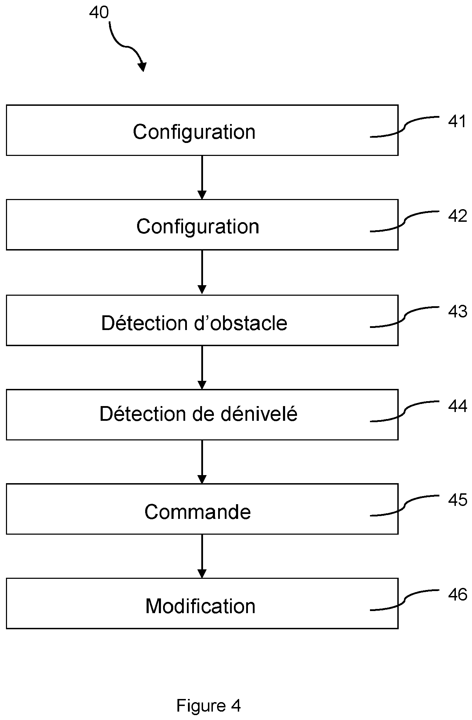

La figure 4 représente un procédé 40 de détection de dénivelés et/ou d'obstacles dans un champ, qui comporte :
- une étape de détection 43 d'un obstacle,
- une étape de détection 44 d'un dénivelé au moyen d'un moyen de détection d'un dénivelé,
- une étape de commande 45 d'une modification de la position de deux roues, 123 et 143, et/ou d'au moins un outil :
   - lorsqu'un obstacle est détecté et/ou
   - lorsqu'une absence de contact d'une autre roue 119 sur le sol est détectée, le moyen de détection d'un dénivelé comportant cette autre roue 119 en appui sur le sol et un capteur 120 de contact de ladite autre roue 119 sur le sol
   - une étape de modification 46 de la position relative desdites deux roues, 123 et 143, et/ou de l'au moins un outil par rapport au châssis.

Le procédé 40 peut comporter des étapes optionnelles de :
- configuration 41 du positionnement des roues, 123 et 143, par exemple définie par l'utilisateur au moyen d'une interface homme-machine ou issue d'une mémoire informatique 151, et/ou
- configuration 42 de la position de l'outil, 116 ou 136, par rapport au châssis, par exemple définie par l'utilisateur au moyen d'une interface homme-machine ou issue d'une mémoire informatique 151.

Préférentiellement, les moyens du dispositif 100 et du kit sont configurés pour mettre en oeuvre les étapes du procédé 40 et leurs modes de réalisation tels qu'exposés ci-dessus et le procédé 40 ainsi que ses différents modes de réalisation peuvent être mis en oeuvre par les moyens du dispositif 100.

## Revendications

1. Dispositif (100) de détection de dénivelés et/ou d'obstacles dans un champ, **caractérisé en ce qu'**il comporte :
- un châssis comportant :
- deux roues (123, 143),
- au moins un outil (116, 136),
- au moins un moyen de détection d'un obstacle (115, 135),
- au moins un moyen de détection d'un dénivelé comportant une autre roue (119) en appui sur le sol et un capteur de contact (120) de cette autre roue (119) sur le sol,
- un moyen de modification (121, 141, 114, 134, 113, 133) de la position relative desdites deux roues (123, 143) et/ou de l'au moins un outil par rapport au châssis,
- un moyen de commande (150) configuré pour :
- commander la modification de la position de l'au moins un outil lorsqu'un obstacle est détecté, et
- commander la modification de la position desdites deux roues (123, 143) par rapport au châssis lorsqu'une absence de contact de ladite autre roue (119) sur le sol est détectée.

2. Dispositif (100) selon la revendication 1, dans lequel le moyen de commande (150) comporte un moyen de réglage (152) d'une position latérale de chaque moyen de détection d'obstacle par rapport au châssis.

3. Dispositif (100) selon la revendication 2, dans lequel, le moyen de commande (150) comporte un moyen de mémorisation (151) d'une position latérale avant la détection d'un obstacle, le moyen de commande étant configuré pour :
- rétracter au moins un outil lorsqu'un obstacle est détecté et
- en absence d'obstacle, repositionner l'au moins un outil à la position latérale mémorisée avant la détection d'un obstacle.

4. Dispositif (100) selon l'une des revendications 2 ou 3, qui comporte, de plus, un moyen de mesure (106) d'une dimension latérale de l'au moins un outil (116, 136), et dans lequel la position latérale de chaque moyen de détection (115, 135) d'obstacle par rapport au châssis est réglée en fonction de la dimension latérale mesurée.

5. Dispositif (100) selon l'une des revendications 1 à 4, qui comporte, de plus, un moyen d'enregistrement (153) de la position de l'au moins un outil (116, 136) par rapport au châssis.

6. Dispositif (100) selon la revendication 5, dans lequel le moyen de commande (150) est configuré pour positionner l'au moins un outil (116, 136) dans la dernière position enregistrée.

7. Dispositif (100) selon l'une des revendications 1 à 6, dans lequel le moyen de modification (121, 141, 114, 134, 113, 133) de la position relative desdites deux roues (123, 143) et de l'au moins un outil (116, 136) par rapport aux châssis comporte au moins un vérin hydraulique.

8. Dispositif (100) selon l'une des revendications 1 à 7, dans lequel le moyen de détection d'un obstacle (115, 135) comporte une partie flexible se déformant au contact d'un obstacle et un capteur de déformation de la partie flexible.

9. Procédé (40) de détection de dénivelés et/ou d'obstacles dans un champ, **caractérisé en ce qu'**il comporte :
- une étape de détection (43) d'un obstacle,
- une étape de détection (44) d'un dénivelé au moyen d'un moyen de détection d'un dénivelé,
- une étape de commande (45) configuré pour commander la modification de la position de deux roues (123, 143) et/ou d'au moins un outil :
- lorsqu'un obstacle est détecté et/ou
- lorsqu'une absence de contact d'une autre roue (119) sur le sol est détectée, le moyen de détection d'un dénivelé comportant cette autre roue (119) en appui sur le sol et un capteur (120) de contact de ladite autre roue (119) sur le sol,
- une étape de modification (46) de la position relative desdites deux roues (123, 143) et/ou de l'au moins un outil par rapport au châssis.

10. Kit pour former un dispositif de détection de dénivelés et/ou d'obstacles dans un champ, **caractérisé en ce qu'**il comporte :
- au moins un moyen de fixation à un châssis,
- deux roues (123, 143),
- au moins un moyen de détection d'un obstacle (115, 135),
- au moins un moyen de détection d'un dénivelé comportant une autre roue (119) en appui sur le sol et un capteur de contact (120) de cette autre roue (119) sur le sol,
- un moyen de modification (121, 141, 114, 134, 113, 133) de la position relative desdites deux roues (123, 143) et/ou de l'au moins un outil par rapport au châssis,
- un moyen de commande (150) configuré pour :
- commander la modification de la position de l'au moins un outil lorsqu'un obstacle est détecté, et
- commander la modification de la position desdites deux roues (123, 143) par rapport au châssis lorsqu'une absence de contact de ladite autre roue (119) sur le sol est détectée.
